**Europäisches Patentamt**

**European Patent Office**

**Office européen des brevets**

(11) Veröffentlichungsnummer: **0 097 215**
**B1**

(12) # EUROPÄISCHE PATENTSCHRIFT

(45) Veröffentlichungstag der Patentschrift:
15.10.86

(21) Anmeldenummer: 82810269.9

(22) Anmeldetag: 18.06.82

(51) Int. Cl.⁴: **F 02 F 3/10, F 16 J 9/22**

(54) Kolben einer Hubkolbenbrennkraftmaschine.

(43) Veröffentlichungstag der Anmeldung:
04.01.84 Patentblatt 84/1

(45) Bekanntmachung des Hinweises auf die Patenterteilung:
15.10.86 Patentblatt 86/42

(84) Benannte Vertragsstaaten:
**CH DE IT LI**

(56) Entgegenhaltungen:
**DE-A-2 032 970**
**US-A-2 403 455**
**US-A-4 233 072**
**US-A-4 251 599**

(73) Patentinhaber: **GEBRÜDER SULZER AKTIENGESELLSCHAFT, Zürcherstrasse 9, CH-8401 Winterthur (CH)**

(72) Erfinder: **Fernando, Peter, Dörnierweg 8, CH- 8544 Sulz (CH)**

**Beschreibung**

Die Erfindung bezieht sich auf einen Kolben einer Hubkolbenbrennkraftmaschine, dessen dem Brennraum im Zylinder zugewendeter Oberteil aus Stahl besteht und in seiner Mantelfläche mehrere, in Umfangsrichtung verlaufende und über die Länge des Kolbenoberteils verteilte Ringnuten zur Aufnahme von Kolbenringen aufweist, wobei zwischen jeweils zwei Ringnuten ein Steg vorhanden ist. Bei Kolben dieser bekannten Bauart besteht der Unterteil aus Grauguss, und in den Ringnuten des Kolbenoberteils sind geschlitzte Kolbenringe untergebracht, die bei der Bewegung des Kolbens an der umgebenden Zylinderwand anliegen. Bei solchen Kolben ist festgestellt worden, dass nach gewissen Motorbetriebszuständen sich an den Stegen Risse bildeten, die auf eine Ueberhitzung des Stegwerkstoffes zurückzuführen sind und die die Lebensdauer des Kolbens beeinträchtigen.

Der Erfindung liegt die Aufgabe zugrunde, einen Kolben der eingangs genannten Art auf einfache Weise so zu verbessern, dass die Rissbildung an den Stegen vermieden wird.

Diese Aufgabe wird erfindungsgemäss dadurch gelöst, dass mindestens der zwischen den beiden dem Brennraum am nächsten liegenden Ringnuten befindliche Steg auf seiner Umfangsfläche mit einer auf dem Grundwerkstoff fest verankerten Schicht aus einem metallischen Werkstoff versehen ist, der im Vergleich zum Grundwerkstoff einen um mindestens 50 % kleineren Faktor

$$\alpha = \frac{E \cdot \beta}{\sigma_s \cdot \lambda} \quad \left[\frac{m \cdot h}{kcal}\right]$$

aufweist, worin E den Elastizitätsmodul

$$\left[\frac{kg}{mm^2}\right],$$

ß den linearen Ausdehnungskoeffizienten

$$\left[{}^\circ C^{-1}\right],$$

$\sigma_s$ die Streckgrenze

$$\left[\frac{kg}{mm^2}\right]$$

und $\lambda$ die Wärmeleitfähigkeit

$$\left[\frac{kcal}{m \cdot h \cdot {}^\circ C}\right]$$

des betreffenden Werkstoffs bedeuten und wobei die Schichtdicke mindestens 1 mm beträgt.

Durch die mit dem Grundwerkstoff verankerte Schicht mit dem im Vergleich zum Grundwerkstoff wesentlich kleineren Faktor $\alpha$ wird der Steg auf seinem Umfang bedeutend widerstandsfähiger gegen die hohen Temperaturen des vom Brennraum her durch den Schlitz des Kolbenringes durchtretenden Gases. Zugleich wird die Wärmeableitung von der Schicht in den Kolbenoberteil verbessert. Damit sind auf verhältnismässig einfache Weise eine Rissbildung und Folgeschäden vermieden.

Nach einer vorteilhaften Weiterbildung der Erfindung besteht die Schicht zu mindestens 90 % aus Molybdän. Molybdän hat einen Faktor $\alpha$ von 10

$$\left[\frac{m \cdot h}{kcal}\right].$$

Aus der US-A-2 403 455 ist ein aus Gusseisen bestehender Kolben für Brennkraftmaschinen bekannt, bei dem sowohl die Stege zwischen den Ringnuten als auch der oberhalb der obersten Ringnut und der unterhalb der untersten Ringnut befindliche Kolbenmantel mit einer auf dem Grundwerkstoff verankerten Schicht aus einem metallischen Werkstoff versehen sind, nämlich einer dünnen Chromschicht von 0,254mm (0,01 Zoll) Dicke. Diese Chromschicht dient dazu, den Verschleiss der Ringnutenflanken im Bereich der Mantelfläche des Kolbens zu vermindern.

Aus der DE-A-20 32 970 ist es bekannt, in einem Brennkraftmaschinen-Kolben aus Leichtmetall Ringe einzugiessen, die aus einem Werkstoff mit grösserer Warmfestigkeit als derjenigen des Leichtmetalls bestehen und die mit ihrer äusseren Umfangsfläche einen Teil der Kolbenmantelfläche und mit einer radialen Fläche einen Teil einer Ringnutenflanke bilden. Auch bei diesem Kolben sollen die eingegossenen Ringe den Verschleiss der Ringnutenflanken im Bereich der Kolbenmantelfläche vermindern.

Ein Ausführungsbeispiel der Erfindung wird in der folgenden Beschreibung anhand der Zeichnung näher erläutert. Es zeigen:

Fig. 1 eine Ansicht des Oberteils eines Kolbens nach der Erfindung, wobei die Kolbenringe weggelassen sind, und

Fig. 2 einen axialen Schnitt durch die Kolbenwand entsprechend der Linie II - II in Fig. 1, jedoch mit Kolbenringen.

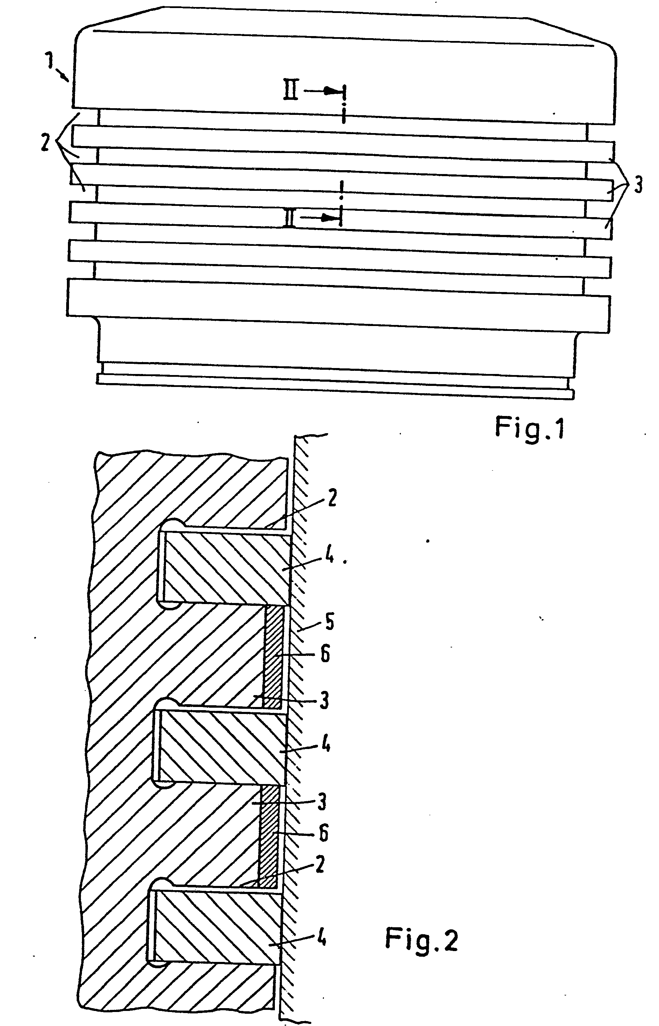

Gemäss Fig. 1 weist der aus leicht-legiertem Stahl, z.B. 36NICR10 gegossene oder geschmiedete Oberteil I eines Kolbens fünf Ringnuten 2 auf, die in Umfangsrichtung des Oberteils verlaufen. Zwischen je zwei Ringnuten 2 befindet sich ein Steg 3. Am in Fig. I unteren Ende des Oberteils I ist in nicht näher dargestellter Weise ein aus Grauguss bestehender Kolbenunterteil vorgesehen, in dem sich auch die Kolbenstange befindet. Die Kolbenstange, der Kolbenunterteil und der Oberteil I sind in bekannter Weise durch Dehnschrauben miteinander verbunden. Der Kolben wird in einer Dieselbrennkraftmaschine der Kreuzkopfbauart verwendet.

Gemäss Fig. 2 ist in jeder Ringnut 2 ein Kolbenring 4 untergebracht. jeder Kolbenring 4 weist einen axialen oder schrägen Schlitz auf, sodass er sich mit seiner äusseren Umfangsfläche federnd an die Wand 5 einer den Kolben umgebenden Zylinderbüchse anlegen kann. Wie Fig. 2 weiter zeigt, ist auf der Umfangsfläche der beiden zwischen den drei oberen Kolbenringen 4 befindlichen Stege 3 eine mindestens 1 mm dicke Schicht 6 aufgebracht, die erfindungsgemäss aus einem Werkstoff besteht, dessen Faktor $\alpha$ um mindestens 50 % kleiner ist als der des Grundwerkstoffs. Auf den unterhalb des dritten Kolben-ringes 4 befindlichen Stegen fehlt in diesem Beispiel eine den Schichten 6 entsprechende Schicht. Die beiden Schichten 6 bestehen aus Molybdän, dessen Faktor $\alpha = 10$

$$\left[\frac{m \cdot h}{kcal}\right]$$

ist. Der Faktor ist durch die Beziehung:

$$\alpha =$$

$$\frac{E \cdot \beta}{\sigma_S \cdot \lambda} \qquad \left[\frac{m \cdot h}{kcal}\right]$$

definiert, worin E den Elastizitätsmodul

$$\left[\frac{kg}{mm^2}\right],$$

$\beta$ den linearen Ausdehnungskoeffizienten

$$[^{o}C^{-1}],$$

$\sigma_s$ die Streckgrenze

$$\left[\frac{kg}{mm^2}\right]$$

und $\lambda$ die Wärmeleitfähigkeit

$$\left[\frac{kcal}{m \cdot h \cdot {}^{o}C}\right]$$

des betreffenden Werkstoffs bedeuten. Der Faktor $\alpha$ des Stahls des Kolbenoberteils 1 und damit der Stege beträgt 141

$$\left[\frac{m \cdot h}{kcal}\right].$$

Das Herstellen des Kolbenoberteils geschieht folgendermassen. Der gegossene oder geschmiedete Rohling wird spanabhebend bearbeitet, wobei die Mantelfläche noch keine Ringnuten erhält. Die glatte Mantelfläche wird dann in dem Bereich, in dem die drei obersten, zum Brennraum hin liegenden Kolbenringe zu liegen kommen, durch Auftragschweissung mit der Molybdänschicht von ausreichender Dicke versehen. Danach wird die Oberfläche dieser Schicht auf Mass spanabhebend bearbeitet, wobei die verbleibende Schichtdicke noch mindestens 1 mm beträgt. Anschliessend werden die Nuten 2 für die Kolbenringe 4 eingearbeitet.

Schliesslich werden die seitlichen Begrenzungsflächen der Ringnuten 2 galvanisch verchromt, was an sich zum Stand der Technik gehört. Vorher werden die Umfangsflächen der Schichten 6 bedeckt, so dass sich während der galvanischen Verchromung kein Chrom auf diesen Schichten niederschlagen kann. Die Galvanisierungsschichten sind so dünn, dass sie in der Zeichnung nicht extra dargestellt sind.

Durch die Schichten 6 wird im Betrieb des Kolbens eine Zerstörung der Stege 3 infolge Ueberhitzung sicher vermieden.

Abweichend von dem beschrieben Ausführungsbeispiel kann auch nur der oberste, zum Brennraum hin liegende Steg 3 mit einer Schicht 6 versehen sein, oder es können solche Schichten auch auf alle übrigen Stege 3 aufgebracht werden. Ausser durch Schweissen lassen sich die Schichten 6 auch durch Spritzen aufbringen.

**Patentansprüche**

1. Kolben einer Hubkolbenbrennkraftmaschine, dessen dem Brennraum im Zylinder zugewendeter Oberteil (1) aus Stahl besteht und in seiner Mantelfläche mehrere, in Umfangsrichtung verlaufende und über die Länge des Kolbenoberteils verteilte Ringnuten (2) zur Aufnahme von Kolbenringen (4) aufweist, wobei zwischen jeweils zwei Ringnuten ein Steg (3) vorhanden ist, dadurch <u>gekennzeichnet</u>, dass mindestens der zwischen den beiden dem Brennraum am nächsten liegenden Ringnuten (2) befindliche Steg (3) auf seiner Umfangsfläche mit einer auf dem Grundwerkstoff fest verankerten Schicht (6) aus einem metallischen Werkstoff versehen ist, der im Vergleich zum Grundwerkstoff einen um mindestens 50 % kleineren Faktor

$$\alpha = \frac{E \cdot \beta}{\sigma_S \cdot \lambda} \quad \left[\frac{m \cdot h}{kcal}\right]$$

aufweist, worin E den Elastizitätsmodul

$$\left[\frac{kg}{mm^2}\right],$$

β den linearen Ausdehnungskoeffizienten [°C⁻¹], σ$_s$
die Streckgrenze

$$\left[\frac{kg}{mm^2}\right]$$

und λ die Wärmeleitfähigkeit

$$\left[\frac{kcal}{m \cdot h \cdot °C}\right]$$

des betreffenden Werkstoffs bedeuten und wobei die Schichtdicke mindestens 1 mm beträgt.

2. Kolben nach Anspruch I, dadurch gekennzeichnet, dass die Schicht (6) zu mindestens 90 % aus Molybdän besteht.

## Claims

1. A piston of a reciprocating internal combustion engine having a steel top part (1) facing the combustion chamber in the cylinder and being formed in its generated surface with a number of annular grooves (2) which extend around the piston periphery, are distributed over the length of the piston top part (1) and are adapted to receive piston rings (4), a web (3) being present between any two annular grooves (2), characterised in that at least the web (3) between the two annular grooves (2) nearest the combustion chamber has on its peripheral surface a layer (6) firmly anchored to the parent material, the layer being made of a metal substance having a factor:

$$\alpha = \frac{E \cdot \beta}{\sigma_s \cdot \lambda} \quad \left[\frac{m \cdot h}{kcal}\right]$$

at least 50% less than that of the parent material,
E denoting the elasticity modulus in [kg/mm²],
β denoting the coefficient of linear expansion in [°C⁻¹], σ$_s$ denoting the yield point in [kg/mm²]
and λ denoting the heat conductivity in [kcal/m.h.°C] of the layer material, layer thickness being at least 1 mm.

2. A piston according to claim 1, characterised in that the layer (6) is at least 90% molybdenum.

## Revendications

1. Piston d'une machine à combustion interne à piston de course dont la partie supérieure (1) tournée vers la chambre de combustion du cylindre est constituée par de l'acier et présente dans sa surface enveloppe plusieurs rainures annulaires (2) s'étendant dans la direction périphérique et réparties sur la longueur de la partie supérieure de piston pour recevoir les segments (4) de piston, une nervure (3) étant présente entre chaque ensemble respectif de rainures annulaires, caractérisé en ce qu'au mions la nervure (3) se trouvant entre les deux rainures annulaires (2) situées au plus près de la chambre de combustion est munie sur sa face périphérique d'une couche (6) en une matière métallique ancrée fixement sur la matière de base et qui présente, en somparaison de la matière de base, un facteur

$$\alpha = \frac{E \cdot \beta}{\sigma_s \cdot \lambda} \left[ \frac{m \cdot h}{kcal} \right]$$

plus faible d'au mions 50 %, E étant le module d'élasticité

$$\left[ \frac{kg}{mm^2} \right],$$

$\beta$ le coefficient linéaire de dilatation (°C$^{-1}$), $\sigma_s$ la limite élastique et $\lambda$ la conductibilité thermique

$$\left[ \frac{kcal}{m \cdot h \cdot °C} \right]$$

de la matière correspondante et l'épaisseur de la couche étant au moins de 1 mm.

2. Piston selon la revendication 1, caractérisé en ce que la couche (6) est consituée au moins pour 90 % de molybdène.

0 097 215

Fig.1

Fig.2